# EUROPEAN PATENT APPLICATION

(11) **EP 4 563 712 A1**
(43) Date of publication of application: **04.06.2025**
(21) Application number: 23854683.2
(22) Date of filing: 25.04.2023
(51) Int. Cl.: C22B 1/16

(54) **METHOD FOR PRODUCING SINTERED ORE**

(30) Priority: 15.08.2022 JP 2022129362
(71) Applicant: JFE Steel Corporation, Tokyo 100-0011 (JP)
(72) Inventor: TAKEHARA, Kenta, Tokyo 100-0011 (JP); FUJIWARA, Shohei, Tokyo 100-0011 (JP); HIGUCHI, Takahide, Tokyo 100-0011 (JP); HORITA, Kenya, Tokyo 100-0011 (JP)
(74) Representative: Hoffmann Eitle
(86) International application number: PCT/JP2023/016283
(87) International publication number: WO 2024/038643

(57) **Abstract**

Provided is a method for producing a sintered ore with a high productivity without requiring any of an expensive anionic polymer dispersant and a step of crushing an iron ore(s) into a fine powder. The method is for producing a sintered ore, and includes: granulating, together with an additive water, a mixture of raw materials for sintering that contains an iron ore composed of multiple kinds of brands, using a granulator; and producing a sintered ore by sintering an obtained granulated raw material for sintering, using a sintering machine, wherein part of or all of the additive water at the time of granulation is substituted by a dust slurry solution in which a solid dust is suspended at a concentration of 20 to 55% by mass in water.

## Description

### Technical Field

The present invention relates to a method for producing a sintered ore which is a raw material for a blast furnace, particularly to a method characterized by focusing on a granulation method of a mixture of raw materials for sintering.

### Background Art

A sintered ore is usually produced by the following steps. **In** the beginning, an auxiliary raw material powder such as limestone, silica, and serpentinite, a miscellaneous raw material powder such as dust, scale, and return ore, and a solid fuel such as coke breeze are each added to a powder iron ore composed of multiple kinds of brands (commonly referred to as sinter feed which has a size of about -10 mm) by an appropriate amount each, thereby obtaining a mixture of raw materials for sintering. Next, water is added to the obtained mixture of raw materials for sintering. A granulated raw material for sintering is then obtained by mixing and granulating the mixture of raw materials for sintering to which water has been added. Next, a sintered ore is obtained by charging the obtained granulated raw material for sintering into a sintering machine and sintering the same. As a result of containing water, this mixture of raw materials for sintering usually turns into quasi particles when mutually agglomerated at the time of granulation. When charged on the palette of the sintering machine, this granulated raw material for sintering that has turned into quasi particles then plays a role in ensuring a favorable gas permeability of the sintering raw material charged layer, thereby promoting the sintering reaction smoothly.

In the aforementioned method for producing a sintered ore, there is a proper water content value for the water added to the mixture of raw materials for sintering at the time of granulation. A water content value higher than the proper value causes only the fine powder with small particle sizes to agglomerate so as to form coarse particles with a low strength, and a water content value lower than the proper value leads to the generation of ungranulated powders; both of these cases constitute the causes of impairing the gas permeability in the above sintering raw material charged layer and impairing productivity accordingly. Meanwhile, when adding a fine powder when granulating the mixture of raw materials for sintering, the effect of such fine powder as a binder is able to suppress the generation of coarse particles and ungranulated powders at the time of granulation.

For example, Patent Literature 1 provides a method where an iron ore crushed to a size of 10 µm or smaller is utilized as a binder, using an anionic polymer dispersant.

### Citation List

### Patent Literature

Patent Literature 1: JP-A-2013-32568

### Summary of Invention

### Technical Problem

However, in the case of the technique proposed by Patent Literature 1, there are problems that a step of crushing an iron ore to a size of 10 µm or smaller is required, and that an expensive anionic polymer dispersant is used.

It is an object of the present invention to provide a highly-productive method for producing a sintered ore without requiring any of an expensive anionic polymer dispersant and a step of crushing an iron ore into a fine powder.

### Solution to Problems

In order to achieve the above object, the inventors studied a method of utilizing, as a binder, an ironworks-generated dust with a particle size of several µm to several 100 µm, and then arrived at an idea of adding it in the form of a dust slurry solution in which the solid dust is suspended in water.

That is, the present invention is a method for producing a sintered ore including granulating, together with an additive water, a mixture of raw materials for sintering that contains an iron ore composed of multiple kinds of brands, using a granulator; and producing a sintered ore by sintering an obtained granulated raw material for sintering, using a sintering machine, characterized in that part of or all of the additive water at the time of granulation is substituted by a dust slurry solution in which a solid dust is suspended at a concentration of 20 to 55% by mass in water.

Here, in the case of the method of the present invention for producing a sintered ore, which is configured in the above manner, it is considered that more preferable resolutions can be brought when:
(1) the solid dust is generated during an iron-making process and contains 50% by mass or more of particles with a particle size of -10 µm;
(2) the concentration of the solid dust is thickened to 30 to 50% by mass;
(3) the concentration of the solid dust is thickened to 35 to 45% by mass; and
(4) a method for thickening the concentration of the solid dust is thickening by a thickener.

### Advantageous Effects of Invention

According to the method of the present invention for producing a sintered ore, the granulation of a mixture of raw materials for sintering can be drastically improved by substituting part of or all of an additive water at the time of granulation with a dust slurry solution in which a solid dust is suspended at a concentration of 20 to 55% by mass in water.

### Brief Description of Drawings

[FIG.1] is a flowchart explaining an example of the steps in the method of the present invention for producing a sintered ore.
[FIG.2] is a diagram explaining an example of phenomena during a granulation process in the method of the present invention for producing a sintered ore.

### Description of Embodiments

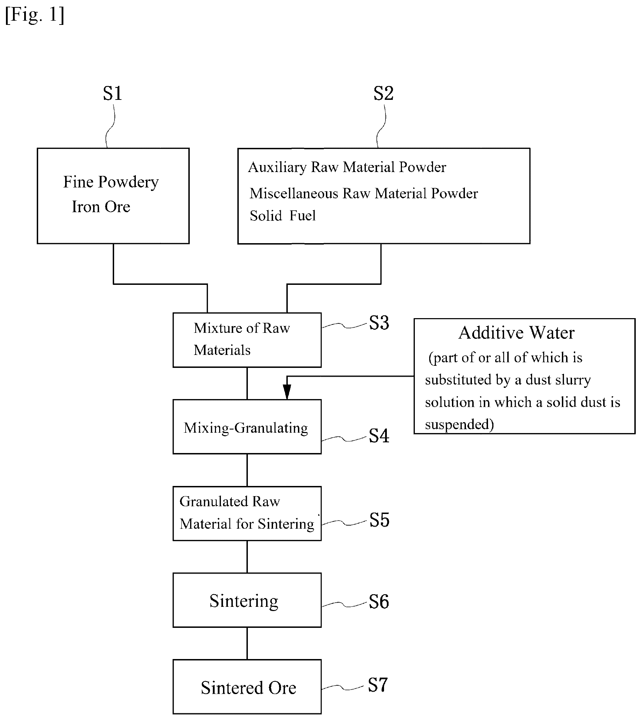

FIG.1 is a flowchart explaining an example of the steps in the method of the present invention for producing a sintered ore. With reference to FIG. 1, the steps in the method of the present invention for producing a sintered ore are explained as follows. At first, there is prepared a powdery iron ore composed of multiple kinds of brands (step 1). Next, an auxiliary raw material powder, a miscellaneous raw material powder, and a solid fuel that have been prepared in a step S2 are each added to the fine powdery iron ore prepared in the step S1 by an appropriate amount each, thereby obtaining a mixture of raw materials for sintering (step S3). Next, an additive water is added to the obtained mixture of raw materials for sintering so as to mix and granulate the mixture of raw materials for sintering (step S4), thereby obtaining a granulated raw material for sintering (step S5). Next, the obtained granulated raw material for sintering is charged into a sintering machine so as to be sintered (step S6), thereby obtaining a sintered ore (step S7). In the present invention, part of or all of the additive water added when performing granulation (step S4) is substituted by a dust slurry solution in which a solid dust is suspended in water.

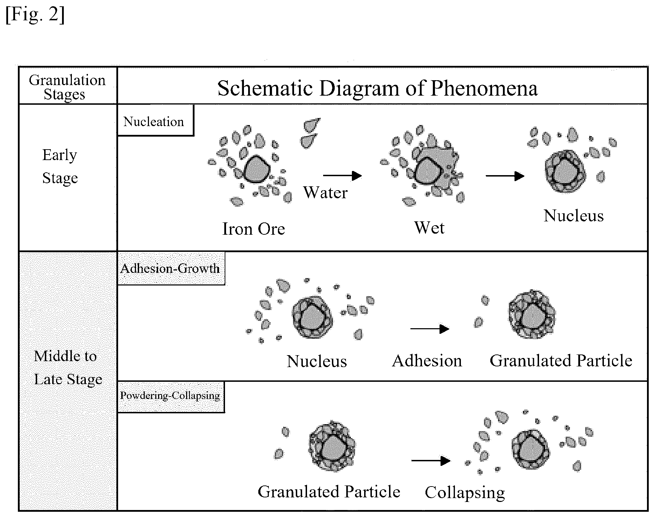

With reference to the above FIG. 1, as for the sintered ore production method where the mixture of raw materials for sintering that contains the iron ore composed of multiple kinds of brands is granulated by a granulator, and where a sintered ore is then produced by sintering the obtained granulated raw material for sintering with a sintering machine, in the granulation process (step S4), as shown in FIG.2, the granulated product is generated via stages of (1) generating nucleus and (2) repeating granulation and collapsing of a quasi particle(s) based on the nucleus. At that time, a fine powder, if added, acts as a binder; however, there may be produced, for example, a low-strength granulated product only composed of the fine powder and an ungranulated product unless the fine powder and water are uniformly dispersed. In terms of utilizing, as a binder, an ironworks-generated dust with a particle size of several µm to several 100 µm, the inventors found that there can be achieved a high sintering productivity with an improved granulation property due to uniformly dispersed fine powder and water, by adding, in the granulation process, a dust slurry solution in which the dust is suspended at a concentration of 20 to 55% by mass in water. As for the dust that is to be suspended in the dust slurry solution, it is desired that the dust contain those with a particle size of -10 µm at a ratio of 50% by mass or more because those with a particle size of -10 µm or smaller bring about a superior transportability of the dust slurry if using piping, and also a superior effect of improving granulation property.

That is, the most significant characteristic of the present invention is that part of or all of the additive water at the time of granulation is substituted by a dust slurry solution in which a solid dust is suspended at the concentration of 20 to 55% by mass in water. Further, more preferable embodiments include the solid dust being a dust that is generated during the iron-making process and has a particle size of several µm to several 100 µm; the solid dust concentration being thickened to 30 to 50% by mass; the solid dust concentration being thickened to 35 to 45% by mass; and a method for thickening the solid dust concentration being any one or more of natural sedimentation by a thickener, specific gravity separation with a hydrocyclone, a decanter or the like, and forced dehydration with a filter press.

Here, in the abovementioned method of the present invention for producing a sintered ore, <particle size> is defined as follows.

### <Particle size>

It is a particle size sieved by a sieve with a nominal aperture size in accordance with JIS (Japanese Industrial Standards) Z8801-1; for example, a particle size of 1 mm or smaller refers to a particle size at which a total amount passes through a sieve with a nominal aperture size of 1 mm in accordance with JIS Z8801-1, and such particle size is also expressed as -1 mm. Further, the minimum value of the nominal aperture size as set forth in JIS (Japanese Industrial Standards) Z8801-1 is 20 µm; in the case of a value smaller than that value, e.g., a value of 10 µm or smaller, it is a particle size at which a cumulative fraction of particles with particle sizes of 10 µm or smaller is substantially 100%, such cumulative fraction being obtained via, for example, a laser diffraction scattering method in accordance with JIS 8825, and a gravitational liquid sedimentation method in accordance with JIS Z8820-2.

### Examples

The following tests were actually conducted whereby there were studied the essential and preferable configurations of the method of the present invention for producing a sintered ore.

### <Example 1>

A slurry generated by wet dust collection in an iron-making process was collected; as a result of measuring the solid concentration thereof, the solid concentration was found to be about 20% by mass. As a result of subjecting the solid content to particle size distribution measurement using a laser scattering-type particle size measurement device, the weight ratio of -10 µm particles with respect to the whole solid content was found to be almost 100% by mass. Under various modified concentrations of such slurry, granulation tests using iron ore mixed raw materials were performed to check granulation property, transportability, and sintering productivity. The modification of the slurry concentration was carried out via a natural sedimentation method where the slurry was put into a container and allowed to precipitate for a certain period of time, followed by removing the supernatant water and then collecting the slurry having a given concentration.

The iron ore mixed raw material (water content ratio 5.5% by mass) was at first mixed and granulated with a drum mixer, thereby obtaining quasi particles. At that time, an additive water was added so that there could be achieved a proper granulation water content. As a result of conducting a research in advance, the proper water content value was found to be 7.5% by mass; thus, the amount of the water added was controlled so that the water content contained in the slurry and the separately added water content would be 7.5% by mass in total. Water addition was carried out via a configuration involving a spraying nozzle, a pump, and piping. Water and the slurry were added at the same time as when the drum mixer started to be rotated after charging the ore raw material into the mixer. A total granulation time was set to 5 min.

Next, a sintering test was performed in such a manner that the quasi particles were charged into a small iron-made sintering test pot having a diameter of 300 mmφ and a height of 600 mm, followed by igniting the raw material in the upper portion of the filling layer. The sintered cake was dropped once from a height of 2 m, and a +10 mm ratio in the cake dropped was defined as a finished product ratio. Productivity was calculated using the time required for sintering and the grate area of the sintering test machine.

**In** accordance with the abovementioned steps, slurry transportability, mixability in the drum mixer, and sintering productivity were compared among invention examples 1 to 10 and comparative examples 1 to 3, as shown in the following Table 1. Here, the invention example 1 is an example in which the slurry collected was directly used as it was. The invention examples 2 to 8 are examples in which the slurry collected was thickened to the concentration of 20 to 55% by mass. The invention examples 9 and 10 are examples in which the slurry collected was thickened to the concentration of 20 to 55% by mass, and part of the additive water was substituted by such thickened slurry. The comparative example 1 is an example in which the slurry was used as a powder after being completely dried. The comparative examples 2 and 3 are respectively an example in which the slurry collected was thickened to a concentration of 15% by mass, and an example in which the slurry collected was thickened to a concentration of 60% by mass.

Further, slurry transportability was evaluated in terms of pipe clogging when added to the mixer. Mixability in the drum mixer was evaluated in terms of nozzle clogging. Productivity was evaluated via a pot test.

**[Table 1]**

| | Comparative Example 1 | Comparative Example 2 | Invention Example 1 | Invention Example 2 | Invention Example 3 | Invention Example 4 | Invention Example 5 | Invention Example 6 | Invention Example 7 | Invention Example 8 | Invention Example 9 | Invention Example 10 | Comparative Example 3 |
|---|---|---|---|---|---|---|---|---|---|---|---|---|---|
| Slurry concentration (mass%) | 100 | 15 | 20 | 25 | 30 | 35 | 40 | 45 | 50 | 55 | 25 | 50 | 60 |
| Slurry additive amount (kg) | 5 | 1.55 | 1.65 | 1.80 | 1.96 | 2.09 | 2.28 | 2.53 | 2.82 | 3.20 | 1.60 | 1.80 | 3.78 |
| Solid content | 5 | 0.23 | 0.33 | 0.45 | 0.59 | 0.73 | 0.91 | 1.14 | 1.41 | 1.76 | 0.40 | 0.90 | 2.27 |
| Water Content | 0 | 1.32 | 1.32 | 1.35 | 1.37 | 1.36 | 1.37 | 1.39 | 1.41 | 1.44 | 1.20 | 0.90 | 1.51 |
| Slurry Ratio (with respect to Raw Material) (%) | | 2.6 | 2.8 | 3.0 | 3.3 | 3.5 | 3.8 | 4.2 | 4.7 | 5.3 | 2.7 | 3.0 | 6.3 |
| Additive Water(kg) | 1.60 | | | | | | | | | | 0.12 | 0.45 | |
| Raw Material Weight(kg) | 60 | 60 | 60 | 60 | 60 | 60 | 60 | 60 | 60 | 60 | 60 | 60 | 60 |
| Water Content in Raw Material (mass%) | 5.5 | 5.5 | 5.5 | 5.5 | 5.5 | 5.5 | 5.5 | 5.5 | 5.5 | 5.5 | 5.5 | 5.5 | 5.5 |
| Water Amount in Raw Material(kg) | 3.3 | 3.3 | 3.3 | 3.3 | 3.3 | 3.3 | 3.3 | 3.3 | 3.3 | 3.3 | 3.3 | 3.3 | 3.3 |
| Total Weight(kg) | 65.0 | 61.6 | 61.7 | 61.8 | 62.0 | 62.1 | 62.3 | 62.5 | 62.8 | 63.2 | 61.6 | 61.6 | 63.8 |
| Water Content in Charged Raw Material (mass%) | 7.5 | 7.5 | 7.5 | 7.5 | 7.5 | 7.5 | 7.5 | 7.5 | 7.5 | 7.5 | 7.5 | 7.5 | 7.5 |
| Fine Powder Ratio in Charged Raw Material (mass%) | 7.7 | 0.4 | 0.5 | 0.9 | 1.2 | 1.2 | 1.5 | 1.8 | 2.2 | 2.8 | 0.9 | 2.2 | 3.9 |
| Transportability | Good | Good | Good | Good | Good | Good | Good | Good | Good | Fair | Good | Good | Poor |
| Mixability | Poor | Good | Good | Good | Good | Good | Good | Good | Fair | Fair | Good | Fair | Poor |
| Productivity (t/hPoorm²) | 1.00 | 1.00 | 1.15 | 1.21 | 1.23 | 1.24 | 1.25 | 1.25 | 1.23 | 1.19 | 1.11 | 1.21 | 0.80 |

The following was made clear from the results shown in Table 1. **In** the comparative example 1 showing the result obtained in the case where the slurry was used as a powder after being completely dried, although an excellent transportability was exhibited, the powder which was an ultrafine powder agglomerated by absorbing water in the drum mixer, which prevented water from reaching other ore raw materials, thereby generating a large amount of ungranulated powders. **In** the comparative example 2 showing the result obtained in the case where the slurry collected was diluted to a concentration of 15% by mass, although an excellent transportability and mixability were exhibited, not much difference in productivity was observed when compared to the comparative example 1. It is considered that this is because a clear effect as a binder effect was not observed due to a low fine powder ratio in the charged raw material which was as low as 0.5% by mass. **In** the comparative example 3 showing the result obtained in the case where the slurry collected was thickened to a concentration of 60% by mass, the viscosity of the slurry rapidly increased, which turned the slurry into a sludge in terms of its property, thereby making pipe transportation difficult and spraying from the nozzle difficult as well. As a result, the sludge was unable to be uniformly mixed with respect to the raw material, which resulted in the generation of ungranulated powders and coarse particles, thereby leading to a deteriorated sintering productivity.

Meanwhile, in the invention example 1 showing the result obtained in the case where the slurry collected was directly used as it was, productivity improved as compared to the comparative examples 1 and 2. In the invention examples 2 to 10 showing the results obtained in the cases where the slurry collected was thickened to the concentration of 20 to 55% by mass, sintering productivity improved as the fine powder ratio in the charged raw material increased. Further, after comparing the invention examples 2 to 10, the invention examples 7 and 10 exhibited no problems in transportability of the thickened slurry, but exhibited phenomena such as clogging at the time of performing spraying from the nozzle. As a result, the slurry in the drum mixer was not able to be sprayed uniformly as compared to the invention example 6, which led to the generation of ungranulated powders, thus causing productivity to be slightly impaired. In the invention example 8, the viscosity of the slurry increased whereby there were observed phenomena such as clogging at the time of performing transportation via the pump and at the time of performing spraying from the nozzle. As a result, the slurry in the drum mixer was not able to be sprayed uniformly as compared to the invention example 7, which led to the generation of ungranulated powders, thus causing productivity to be slightly impaired.

As indicated by the above consideration, by comparing the invention examples 1 to 10 and the comparative examples 1 to 3, it became clear that a sintered ore with a high productivity can be obtained by substituting part of or all of the additive water at the time of granulation with a dust slurry solution in which a solid dust is suspended at a concentration of 20 to 55% by mass in water, without requiring any of an expensive anionic polymer dispersant and a step of crushing the iron ore into a fine powder. Further, when, for example, differences in the property of the dust particles are taken into consideration, it can be understood that the solid dust is more preferably present in the dust slurry solution by a range of 30 to 50% by mass, and that the solid dust is even more preferably present in the dust slurry solution by a range of 35 to 45% by mass.

### <Example 2>

As a preferable example, the addition effect of a thickened slurry was checked by adding 10% by mass of a hard-to-granulate hematite-based high-grade fine powdery ore (concentrate) to a sintering raw material (Australian ore 45% by mass, South American ore 45% by mass). A high-grade fine powdery ore is a raw material that has a specific weight higher than that of a normal raw material and lacks fine particles contributing to adherability. It is inferior in adherability despite a narrow particle size distribution and a high water permeability. Thus, if a slurry is not used as is the case in a conventional method, there is a problem that ungranulated powders will occur as peeling is likely to occur during a tumbling process in a drum mixer.

Here, in fact, as the invention example 10, in a similar manner as the invention example 9, a slurry having an initial concentration of 20% by mass was thickened, whereby a slurry having a concentration of 40% by mass was added for granulation, followed by performing a sintering test to obtain productivity. As a comparative example 5, a sintering test was performed and productivity was obtained in a similar manner as the invention example 10, using a slurry having a concentration of 15% by mass. The results are shown in the following Table 2. As is clear from the results shown in Table 2, as compared to the comparative example 5, the invention example 10 exhibited an improved productivity due to a shortening effect on the sintering time as the particle sizes of the quasi particles increased.

**[Table 2]**

| | Comparative Example 5 | Example 10 |
|---|---|---|
| Raw Material Type | Australian Ore 45mass% | Australian Ore 45mass% |
| | South American Ore 45mass% | South American Ore 45mass% |
| | Concentrate 10mass% | Concentrate 10mass% |
| Slurry Concentration (mass%) | 15 | 40 |
| Productivity (t/hPoorm²) | 1.23 | 1.34 |

### Industrial Applicability

According to the method of the present invention for producing a sintered ore, the granulation of a mixture of raw materials for sintering can be drastically improved by substituting part of or all of an additive water at the time of granulation with a dust slurry solution in which a solid dust is suspended at a concentration of 20 to 55% by mass in water. This production method can also be applied to various other mixture of raw materials for sintering in addition to those exemplified above.

## Claims

1. A method for producing a sintered ore, comprising:
granulating, together with an additive water, a mixture of raw materials for sintering that contains an iron ore composed of multiple kinds of brands, using a granulator; and
producing a sintered ore by sintering an obtained granulated raw material for sintering, using a sintering machine, **characterized in that**
part of or all of the additive water at the time of granulation is substituted by a dust slurry solution in which a solid dust is suspended at a concentration of 20 to 55% by mass in water.

2. The method for producing a sintered ore according to claim 1, wherein
the solid dust is generated during an iron-making process and contains 50% by mass or more of particles with a particle size of -10 µm.

3. The method for producing a sintered ore according to claim 1 or 2, wherein
the concentration of the solid dust is thickened to 30 to 50% by mass.

4. The method for producing a sintered ore according to claim 1 or 2, wherein
the concentration of the solid dust is thickened to 35 to 45% by mass.

5. The method for producing a sintered ore according to claim 3, wherein
a method for thickening the concentration of the solid dust is thickening by a thickener.
